# EUROPEAN PATENT APPLICATION

(11) **EP 4 390 275 A1**
(43) Date of publication of application: **26.06.2024**
(21) Application number: 23218294.9
(22) Date of filing: 19.12.2023
(51) Int. Cl.: F25D 21/00, G05B 23/02, G06N 3/08, G06N 20/00

(54) **SYSTEM AND METHOD FOR SELF-REGULATED DEFROST OPERATION IN REFRIGERATION UNITS**

(30) Priority: 21.12.2022 US 202263476494 P
(71) Applicant: Carrier Corporation, Palm Beach Gardens, FL 33418 (US)
(72) Inventor: Vinoth, Kumar Annamalai, Chennai, Tamil Nadu (IN); Prabhu, Raja S V, Bangalore, Karnataka (IN)
(74) Representative: Dehns

(57) **Abstract**

System (100) for self-regulated defrost operation of refrigeration unit(s) (108-1,108-2;108-N) is disclosed. The system (100) comprises a server (102) configured to generate individual signatures corresponding to historic defrost events for the refrigeration units (108-1,108-2;108-N), where the individual signatures comprise pre-event defrost behavior (602) and post-event defrost behavior (606), which are generated based on defrost parameters and a corresponding defrost policy. The system predicts ice gradient profiles for the refrigeration units (108-1,108-2;108-N) and creates a priority rank based on the outcome impact of each of the ice gradient profiles to create an ice gradient index, determine product input constraints based on product group profiles, product quality impact index, and product compliance, execute design constraints and operational constraints associated with the refrigeration units (108-1,108-2; 108-N) and self-regulate a defrost event (604) for the refrigeration units (108-1,108-2;108-N) in terms of design constraint parameters, based on the individual signatures corresponding to the historic defrost events, the ice gradient index, the product input constraints, and the executed design constraints and operational constraints.

## Description

### BACKGROUND

This invention relates to the field of refrigeration systems, and more particularly, to a system and method for enabling self-regulated enterprise-wide defrost operations in refrigeration units.

Refrigeration units (systems) play a significant role in maintaining adequate temperatures in versatile applications, especially in an enterprise environment. Frost forming in refrigeration units may accumulate over time and turn into ice at an irregular period with a non-uniform pattern. Defrost operation plays a vital role in the performance of refrigeration units and failure to defrost effectively has an adverse effect on product compliance. Existing defrosting methods employ fixed frequency and fixed duration-based defrosting operations without any self-regulation, adaptive defrosting methods which uses recent changes in performance. A poorly executed defrost operation may impact the quality of the products being refrigerated.

Therefore, there is an ongoing need to self-regulate defrost operations in refrigeration units in an enterprise-wide operation scenario.

### SUMMARY

According to a first aspect of the invention there is provided a system for self-regulated defrost operation of one or more refrigeration units. The system comprises a server in communication with the one or more refrigeration units. The server comprises a processor coupled to a memory storing instructions executable by the processor causes the system to generate individual signatures corresponding to historic defrost events for one or more refrigeration units, the individual signatures comprising one or more pre-event defrost behavior and one or more post-event defrost behavior, wherein the individual signatures are generated based on a first set of defrost parameters and a corresponding defrost policy associated with the one or more refrigeration units. The processor further causes the system to predict ice gradient profiles for the one or more refrigeration units and create a priority rank based on an outcome impact of each of the ice gradient profiles to create an ice gradient index. Further, the processor causes the system to determine product input constraints, wherein the product input constraints are determined based on one or more of product group profiles, a product quality impact index, and a product compliance. Furthermore, the processor causes the system to execute design constraints and operational constraints associated with the one or more refrigeration units, and self-regulate a defrost event for the one or more refrigeration units in terms of a set of design constraint parameters, based on the individual signatures corresponding to the historic defrost events, the ice gradient index, the product input constraints, and the executed design constraints and operational constraints.

Optionally, the first set of defrost parameters comprises a defrost type, defrosting time, defrost temperature, and schemes of input data associated with defrost events, and the defrost policy corresponds to defrosting-related static information.

Optionally, the processor causes the system to predict and/or create the defrost policy for each of the one or more refrigeration units based on input data.

Optionally, the product group profiles are generated based on product profiles, and the product quality impact index for each of the product group profiles are determined based on product quality standards and a product spoilage history.

Optionally, the product compliance for each of the product profiles corresponding to each of the product quality impact index are determined based on a set of product compliance parameters.

Optionally, the set of product compliance parameters comprises defrost temperature and defrost time set by manufacturers of the corresponding refrigeration units, and the set of design constraint parameters comprises time period for defrost, defrost temperature, and frequency of defrost.

Optionally, the processor causes the system to determine one or more behavior characteristic features related to temperature, wherein the one or more behaviour characteristic features comprises an evaporator temperature, highest temperature reached during a defrosting process, a rate of change of temperature, and time taken to reach freezing temperature.

Optionally, the processor causes the system to correlate the one or more behavior characteristic features with a second set of parameters, wherein the second set of parameters comprises return air temperature, supply air temperature, evaporator input temperature, and evaporator output temperature.

Optionally, the ice gradient profile corresponds to input about frosting formation of the one or more refrigeration units.

Optionally, the product profiles correspond to profiles of product stored in the one or more refrigeration units.

Optionally, the plurality of product group profiles are created based on an operating temperature, type of cabinet/room, and information extracted from product manuals.

Optionally, the spoilage history and the product quality standards are generated from static information available from regulators and maintenance logs of the one or more refrigeration units.

Optionally, the product compliance of the one or more refrigeration units are determined by correlating the defrost temperature and defrost time associated with each of the refrigeration unit with the defrost temperature and defrost time of remaining refrigeration units among the one or more refrigeration unit, wherein the one or more refrigeration units are within a site or across enterprises.

Optionally, the processor causes the system to exclude the refrigeration unit that are without a self-defrost feature, based on a continuous learning process.

According to a second aspect of the invention there is provided a method for self-regulated defrost operation of one or more refrigeration units. The method comprises the steps of: generating individual signatures corresponding to historic defrost events for one or more refrigeration units, the individual signatures comprise one or more pre-event defrost behavior and one or more post-event defrost behavior, wherein the individual signatures comprises generated based on a first set of defrost parameters and a corresponding defrost policy; predicting ice gradient profiles for the one or more refrigeration units and create a priority rank based on an outcome impact of each of the ice gradient profiles to create an ice gradient index, and determining product input constraints. The product input constraints are determined based on one or more of product group profiles, a product quality impact index, and a product compliance. The method further comprises the step of executing design constraints and operational constraints associated with the one or more refrigeration units, and self-regulating a defrost event for the one or more refrigeration units in terms of a set of design constraint parameters, based on the individual signatures corresponding to the historic defrost events, the ice gradient index, the product input constraints, and the executed design constraints and operational constraints.

Optionally, the method of determining the product input constraints comprises the steps of: generating the product group profiles based on product profiles; determining the product quality impact index for each of the product group profiles based on product quality standards and product spoilage history; and determining the product compliance for each of the product profiles corresponding to each of the product quality impact index based on a set of product compliance parameters.

Optionally, the method comprises the step of determining one or more behavior characteristic features related to temperature, wherein the one or more behaviour characteristic features comprises an evaporator temperature, highest temperature reached during a defrosting process, a rate of change of temperature, and time taken to reach freezing temperature.

Optionally, the method comprises the step of correlating the one or more behavior characteristic features with a second set of parameters, wherein the second set of parameters comprises return air temperature, supply air temperature, evaporator input temperature, and evaporator output temperature.

Optionally, the plurality of product group profiles are created based on an operating temperature, type of the refrigeration unit, and information extracted from product manuals, and the spoilage history and the product quality standards are generated from static information available from regulators and maintenance logs of the one or more refrigeration.

According to a third aspect of the invention there is provided a device configurable with one or more refrigeration units and operable to self-regulate defrost operation of the one or more refrigeration units. The device comprises a processing unit adapted to be operatively coupled to the one or more refrigeration units. The processing unit comprises a processor coupled to a memory storing instructions executable by the processor. The processing unit is configured to generate individual signatures corresponding to historic defrost events for one or more refrigeration units, the individual signature comprise one or more pre-event defrost behavior and one or more post-event defrost behavior, wherein the individual signatures are generated based on a first set of defrost parameters and a corresponding defrost policy associated with the one or more refrigeration units, predict ice gradient profiles for the one or more refrigeration units and create a priority rank based on an outcome impact of each of the ice gradient profiles to create an ice gradient index. Further, the processing unit is configured to determine product input constraints, wherein the product input constraints are determined based on one or more of product group profiles, a product quality impact index, and a product compliance. Furthermore, the processing unit is configured to execute design constraints and operational constraints associated with the one or more refrigeration units, and self-regulate a defrost event for the one or more refrigeration units in terms of a set of design constraint parameters, based on the individual signatures corresponding to the historic defrost events, the ice gradient index, the product input constraints, and the executed design constraints and operational constraints.

The foregoing summary is illustrative only and is not intended to be in any way limiting. In addition to the illustrative aspects, embodiments, and features described above, further aspects, embodiments, features, and techniques of the invention will become more apparent from the following description taken in conjunction with the drawings.

### BRIEF DESCRIPTION OF THE DRAWINGS

The accompanying drawings are included to provide a further understanding of the invention and are incorporated in and constitute a part of this specification. The drawings illustrate exemplary embodiments of the invention and, together with the description, serve to explain the principles of the invention. Certain exemplary embodiments will now be described in greater detail by way of example only and with reference to the accompanying drawings in which:
FIG. 1 is a schematic diagram illustrating an exemplary network architecture of the system for self-regulated defrost operation of refrigeration units.
FIG. 2A is a schematic diagram illustrating exemplary functional modules of the server of the system.
FIG. 2B is an exemplary flow diagram illustrating the working of the system.
FIG. 3 is a flow diagram illustrating an exemplary embodiment of a method for self-regulated defrost operation of refrigeration units.
FIG. 4 is a schematic diagram illustrating the block diagram of the controller associated with the refrigeration units.
FIGs. 5A-5C illustrate exemplary graphs depicting the highest evaporator case temperature during defrosting and the defrost duration data collected from three different refrigeration units.
FIGs. 6A and 6B, illustrate exemplary defrost behaviors of the refrigeration units.

### DETAILED DESCRIPTION

The following is a detailed description of embodiments of the invention depicted in the accompanying drawings. The embodiments are in such detail as to clearly communicate the invention. However, the amount of detail offered is not intended to limit the anticipated variations of embodiments; on the contrary, the intention is to cover all modifications, equivalents, and alternatives falling within the scope of the invention as defined by the appended claims.

Various terms are used herein. To the extent a term used in a claim is not defined below, it should be given the broadest definition persons in the pertinent art have given that term as reflected in printed publications and issued patents at the time of filing.

Disclosed embodiments provide a system and method for enabling self-regulated enterprise-wide defrost operations in refrigeration units (assets) by continuous learning. The system and method self-regulate defrost without relying on existing fixed frequency and fixed duration defrosting in refrigeration units, by continuously measuring and learning from historic defrost events, transforming them into better performing and efficient refrigeration units. The fixed frequency may correspond to the fixed count of defrosts over a predefined period of time and duration may correspond to the time duration for every self-regulated defrost operation.

Individual signatures of defrost events are created by a defrost behavior profiler. The individual signatures comprise one or more pre-event defrost behavior and one or more post-event defrost behavior, which are generated based on defrost time, defrost temperature, and schemes of input data and a defrost policy. Further, an ice gradient profiler predicts the ice profile and creates priority rank by outcome impact to create an ice gradient index for the refrigeration units. In addition, the system and method use product group profiles to generate product groups, a product quality impact index to derive thresholds of product, and a product compliance to get intensity of non-compliance by defrost time and defrost temperature, which are correlated to determine product input constraints. Additionally, design constraints and operational constraints are also used, and defrost events for the refrigeration units are self-regulated in terms of the defrost time, defrost temperature, and defrost frequency, based on the individual signatures corresponding to the historic defrost events, the ice gradient index, the product input constraints, and the executed design constraints and operational constraints. The execution of design and operational constraints involves excluding the data from the refrigeration units that cannot be self-defrosted due to various reasons. Accordingly, the defrosting operation of refrigeration units may be fine-tuned by continuous learning, transforming them into better-performing and efficient refrigeration units. In addition, the users may be notified by the system in an event of any hindrances or issues in the defrost operation.

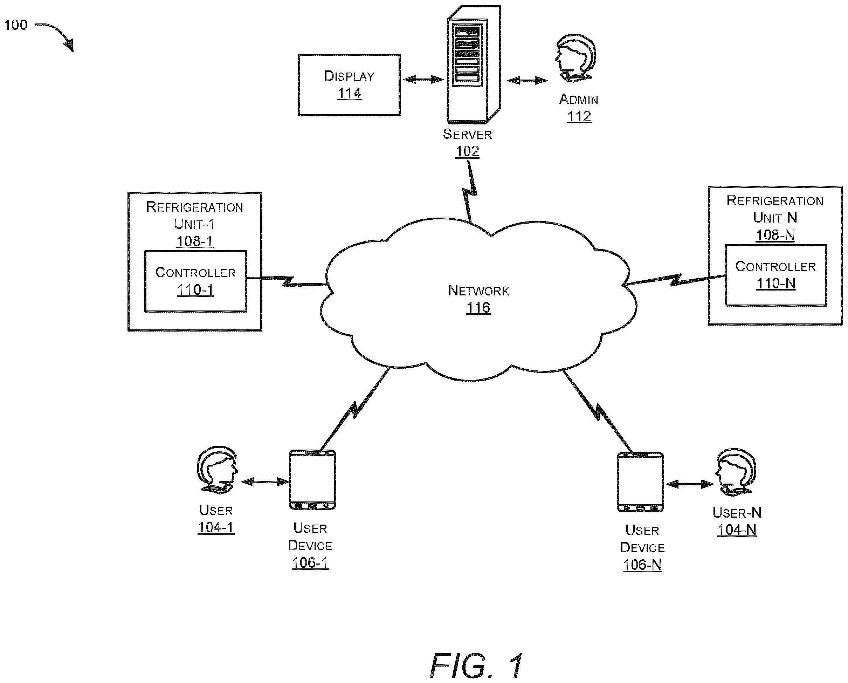

Referring to FIG. 1, an exemplary embodiment of the network architecture of the system 100 is illustrated. According to one or more embodiments, the system 100 provides for self-regulated defrost operation of one or more refrigeration units 108-1 to 108-2 (collectively referred to as refrigeration units 108, herein). The refrigeration units 108 may be cabinet refrigerator, room-based refrigeration system, transport refrigeration units, and the like. While the system 100 has been explained considering that the system 100 is implemented as a web-application on a server 102, it may be understood that system 100 may also be implemented in a variety of computing systems, such as a laptop computer, a desktop computer, a notebook, a workstation, a server, a network server, a cloud-based environment and the like. It would be appreciated that the system 100 is accessed by multiple users 104-1, 104-N (collectively referred to as users 104, hereinafter), through one or more user mobile devices 106-1, 106-N (collectively referred to as user devices 106, hereinafter), or applications residing on the user devices 106. Users 104 may be an individual registered person, a group of registered persons, an organization, and the like, which are associated with the operation, service, and/or maintenance of the refrigeration units. The user 104 may also be the owner or an operator of the refrigeration units 108. Further, the system 100 may be managed by an administrator 112 (admin) at the server end 102. At the server end, the system may include a display 114 that enables the admin 112 to monitor the operation of the system 100 and the refrigeration units 108.

In one or more embodiments, the system 100 registers the users as registered users 104, upon positive verification of their registered mobile devices 106 by the admin 112 at the server end. The system 100 requests and receives, upon a first communicative coupling (or first-time registration) of the user's mobile devices 106 with the server 102, the details of the corresponding user from the mobile devices 106 of the users 104, and correspondingly registers the users as the registered user 104 upon positive verification of the corresponding user details by the admin 112. In an exemplary embodiment, the details of users 104 may include name, photo, age, gender, mobile number, location, biometrics details, expertise, experience, and training certificates of the registered users, but not limited to the like. Users 104 and entities 108 may access the system 100 through a mobile or client application residing on their mobile devices 106 or through a web browser.

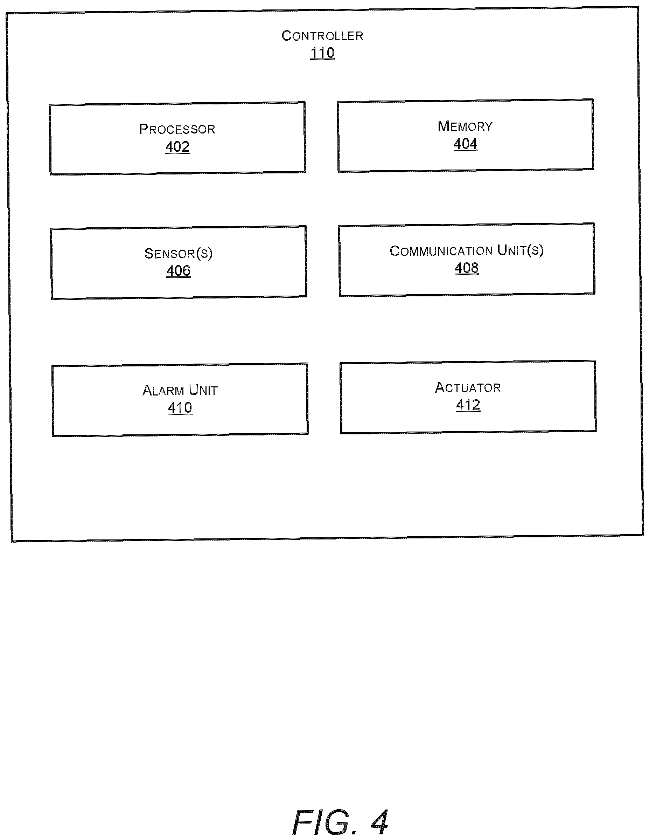

The system 100 further includes one or more controllers 110-1, 110-N (collectively referred to as controller 110, hereinafter) associated with each of the refrigeration units 108. These controllers 110 are configured to monitor real-time parameters of the refrigeration units 108 and also control the operation of the refrigeration units 108. In one or more embodiments, when there is a communication failure between the controller 110 and the server 102 due to the absence of network coverage, the controller 110 stores the parameter metadata of the refrigeration units 108 and transmits to the server 102 when communication between them is re-established. The detailed operation and functional modules of the controller 110 have been described later in conjunction with FIG. 4.

The system 100 registers the refrigeration unit 108 and the corresponding controller 110 with the server 102 at the time of installation, upon communicative coupling of the refrigeration unit 108 or controller 110 with the server 102. In some embodiments, the refrigeration units 108 may be associated with the same service provider or manufacturer. In one or more embodiments, a set of refrigeration units 108 may be associated with one service provider or manufacturer, and another set of refrigeration units 108 (legacy refrigeration units) may be associated with a different service provider or manufacturer. However, the server 102 allows all the refrigeration units (from different service providers/manufacturers) to be registered with and controlled centrally by the same entity (i.e., server 102) upon authorization by the user/owner 104 of the refrigeration unit 108 and validation and authorization by the admin 112. The refrigeration units 108 of different service providers/manufacturers may be configured to be operatively connected to the server 102 by reconfiguring or programming the corresponding controller 110 by an expert or technician, thereby enabling the refrigeration units 108 of different service providers to communicate with the server 102 seamlessly.

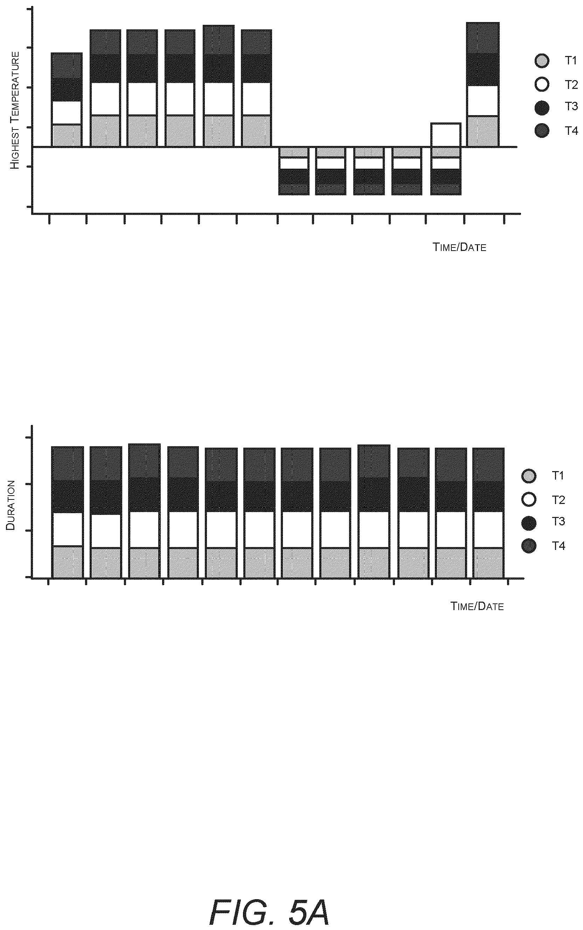

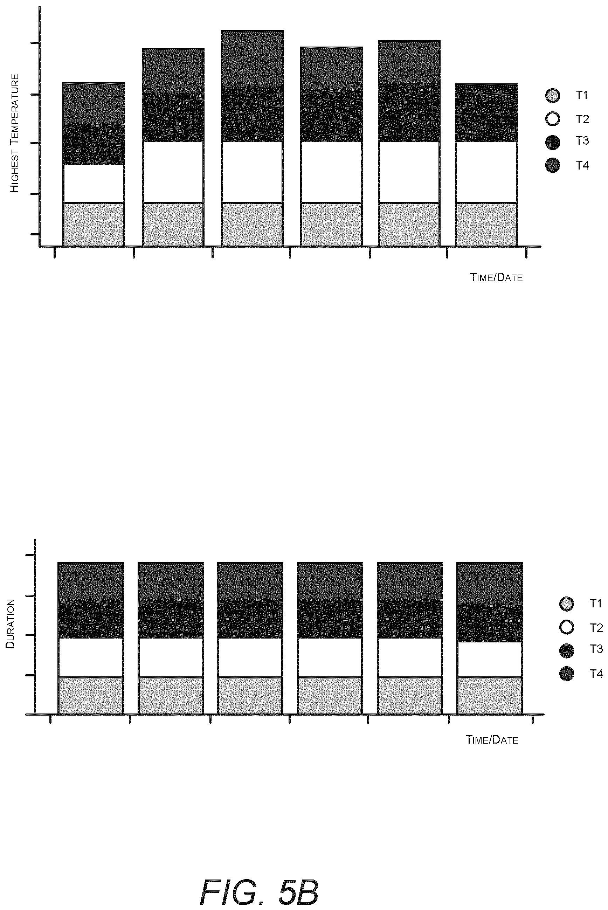

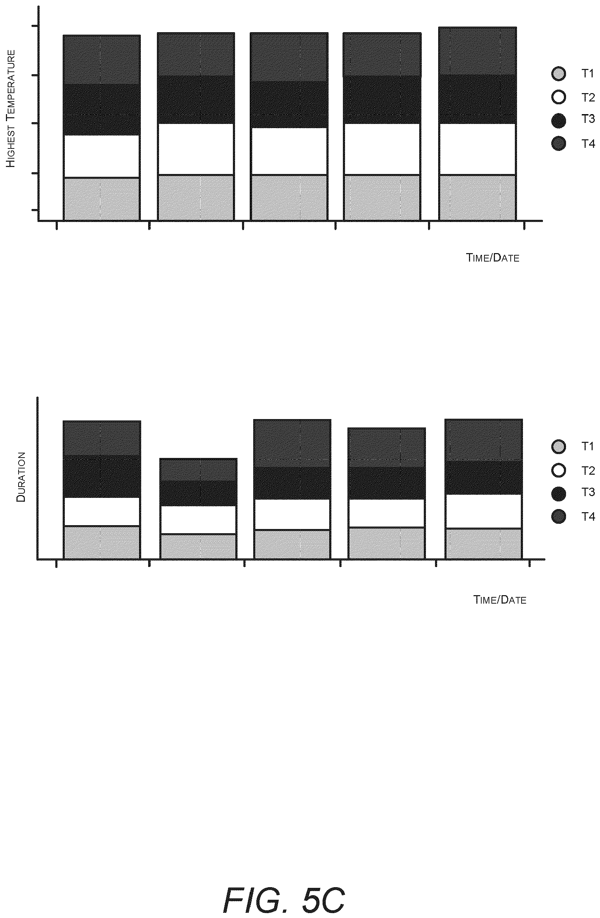

In one or more embodiments, the controller 110 is configured to monitor/capture parametric data related to the performance of the refrigeration units. The collected data are stored and transmitted to the server 102 through the network at predefined intervals or in real-time. The collected parametric data includes evaporator surface temperature, evaporator input temperature, evaporator output temperature (refrigerant flow side), supply air temperature, return air temperature, rack evaporator temperature, rack condensing temperature, defrost status, cooling status, expansion valve opening degree, and other configuration details. Along with dynamic parameters, static parametric data related to refrigeration's attributes such as size, type, design, and cooling type along with operational policies are also collected by the server 102 via the controller 110. Referring to FIGs. 5A-5C, exemplary graphs depicting the highest evaporator case temperature during defrosting operation and the corresponding defrost duration data collected from three different refrigeration units for different days and different durations T1 to T4 on each day are disclosed.

Further, the collected data is analyzed and correlated by the server 102 to generate a plurality of self-learning models (e.g., defrosting thermal models). The collected data may be raw data captured by one or more sensors in the refrigeration units 108. In one or more embodiments, the collected data may be pre-processed data that is sanitized for removing errors and outliers based on an observed historical pattern. The data may include parameters, features, and metadata that provide characteristics of the refrigeration units' performance in association with one or more pre-event defrost behavior, and one or more post-event defrost behavior of the refrigeration units. The data may be collected and updated dynamically for every cycle for the refrigeration units. These characteristics/features explain the performance of each component in the refrigeration units, which includes but is not limited to defrost characteristics, heat exchange characteristics, return air temperature characteristics, and expansion valve characteristics.

The server 102 is configured to use the collected input data to generate individual signatures corresponding to historic defrost events for the refrigeration units 108. The individual signatures may comprise one or more pre-event defrost behavior and the one or more post-event defrost behavior. The individual signatures may be generated based on a first set of defrost parameters that may include but is not limited to comprises a defrost type, defrosting time, defrost temperature, and schemes of input data associated with defrost events and a corresponding defrost policy that may correspond to defrosting related static information. In one or more embodiments, an admin user may define the defrost parameters based on the specifications of the one or more refrigeration units. Alternatively, the server 102 may automatically define the defrost parameters based on the specifications of the one or more refrigeration units.

The server 102 is further configured to use the collected data to predict an ice profile and create priority rank by outcome impact to create an ice gradient index. In one or more embodiments, the server 102 uses product group profiles to generate product groups, product quality impact index to derive thresholds of product, and product compliance to get the intensity of non-compliance by defrost time and defrost temperature. In one or more embodiments, all the three inputs are correlated to generate product constraints. In an exemplary embodiment, the server 102 is configured to exert design constraints and operational constraints to enable the controller 110 to self-regulate defrost events in terms of defrost time, defrost temperature and defrost frequency, based on the individual signatures corresponding to the historic defrost events, the ice gradient index, the product input constraints, and the executed design constraints and operational constraints.

The server 102 is configured to provide for a self-executed or self-regulated defrost operation, according to the fixed frequency and duration in the refrigeration units 108. In such embodiments, the server 102 is configured to continuously measure and learn the (defrost) outcome thereby transforming the refrigeration units into better-performing and efficient assets. In the event of a self-executed defrost operation or a normal defrost operation, there are many instances of failure of defrost operation due to a multitude of reasons.

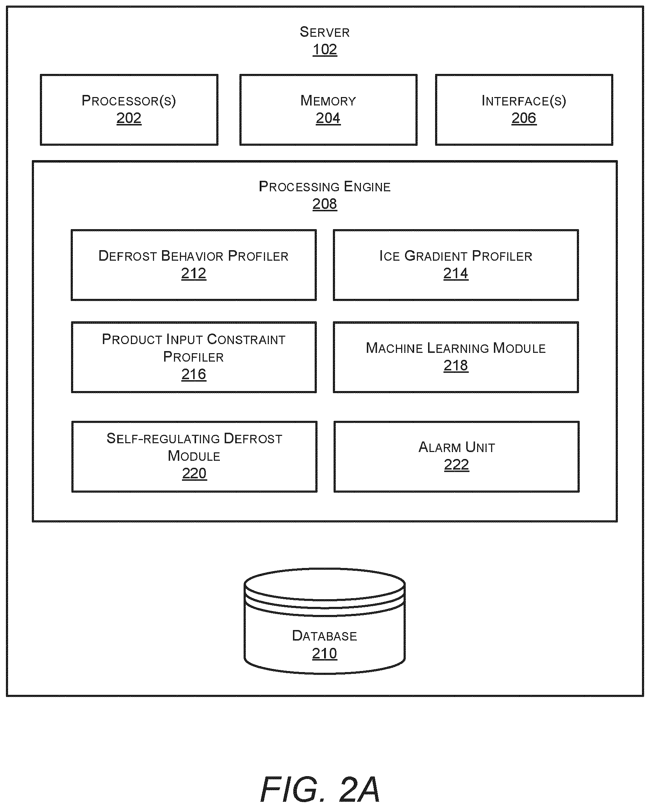

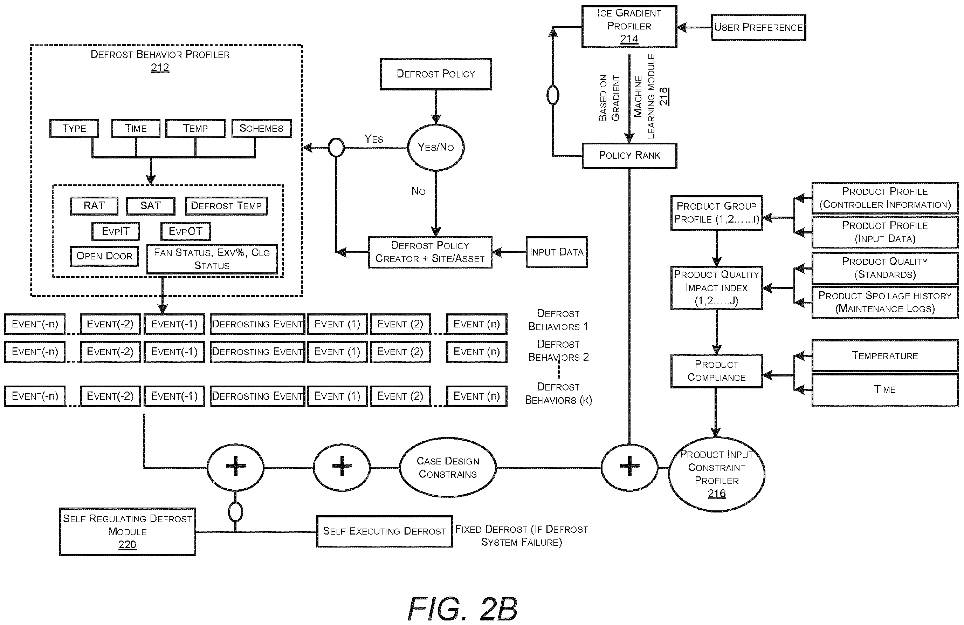

The detailed operation of the system 100 and server 102 has been described later in conjunction with FIGs. 2A and 2B.

The user devices 106 and the display 114 of the server 102 allow the user 104 and the admin 112 respectively to monitor the parameters data (dynamic as well as static) being notified by the controllers 110. The server 102 notifies and/or sends alert signals to the mobile devices 106 in form of text messages, emails, and the likes, in an event of any issue or hindrance in defrosting operations.

The system 100 may be operatively coupled to a website and so be operable from any Internet-enabled user device 106. Examples of user devices 106 may include but are not limited to, a portable computer, a personal digital assistant, a handheld device, and a workstation. The user devices 106 and controllers 110 are communicatively coupled or in communication with server 102 through a network 116.

In one or more embodiments, the network 116 may be a wireless network, a wired network or a combination thereof. Network 116 may be implemented as one of the different types of networks, such as intranet, local area network (LAN), wide area network (WAN), the internet, and the like. Further, the network 116 may either be a dedicated network or a shared network. The shared network represents an association of the different types of networks that use a variety of protocols, for example, Hypertext Transfer Protocol (HTTP), Transmission Control Protocol/Internet Protocol (TCP/IP), Wireless Application Protocol (WAP), and the like, to communicate with one another. Further, network 116 may include a variety of network devices, including transceivers, routers, bridges, servers, computing devices, storage devices, and the like. In one or more embodiments, the network 116 may be a cellular network or mobile communication network based on various technologies, including but not limited to, Global System for Mobile (GSM), General Packet Radio Service (GPRS), Code Division Multiple Access (CDMA), Long Term Evolution (LTE), WiMAX, 5G or 6G network protocols, and the like.

Referring to FIG. 2A and 2B, the functional modules of server 102 of the system 100 are illustrated. The server 102 comprises one or more processor(s) 202 operatively coupled to a memory 204. The one or more processor(s) 202 may be implemented as one or more microprocessors, microcomputers, microcontrollers, digital signal processors, central processing units, logic circuitries, and/or any devices that manipulate data based on operational instructions.

The server 102 also comprises an interface(s) 206 that may comprise a variety of interfaces, for example, interfaces for data input and output devices, referred to as I/O devices, storage devices, and the like. The interface(s) 206 includes a communication module to facilitate communication of server 102 with the controllers 110, the user devices 106, and the display 114 through the network 116. The interface(s) 206 may also provide a communication pathway for one or more internal components or units of the server 102 and with a mobile device of the admin. Examples of such internal components include, but are not limited to, processing engine(s) 208 and data (database) 210.

The processing engine(s) 208 is implemented as a combination of hardware and programming (for example, programmable instructions) to implement one or more functionalities of the processing engine(s) 208. In other examples, the processing engine(s) 208 may be implemented by an electronic circuitry. The database 210 may comprise data that is either stored or generated as a result of functionalities implemented by any of the components of the processing engine(s) 208 or the system 100.

In one or more embodiments, the processing engine(s) 208 includes a defrost behavior profiler 212, an ice gradient profiler 214, a product input constraint profiler 216, a machine learning module 218, a self-regulating defrost module 220, an alarm unit 222, and other units (s). Other unit(s) may supplement the functionalities of the processing engine 208 or the server 102.

In an exemplary embodiment, the defrost behavior profiler 212 is configured to retrieve either from the database 210 or remotely from the controller 110 of connected refrigeration units 108, the defrost operations metadata indicative of various parameters, features, and characteristics associated with a defrost operation in refrigeration units 108. The collected metadata (input data) is analyzed by the defrost behavior profiler 212 to generate individual signatures corresponding to historic defrost events for refrigeration units 108. The individual signatures may comprise one or more pre-event defrost behavior and one or more post-event defrost behavior, which are generated based on a first set of defrost parameters that may include but are not limited to a defrost type, defrosting time, defrost temperature, and schemes of input data associated with defrost events and a corresponding defrost policy that may correspond to defrosting related static information.

The defrost operations metadata (input data) may include operational details of the current and past self-regulating/self-executing defrost operations of the refrigeration units 108. Defrosting-related static information collected like the defrost policy are also as input data for the server 102. Defrosting-related behaviors are created using the data collected from the connected refrigeration units 108. Additional behavior characteristic features related to temperature are also extracted such as but not limited to evaporator temperature, the highest temperature reached during defrosting, rate of change of temperature, and time taken to reach freezing temperature. Further, time and schedules for defrosting behaviors are also extracted.

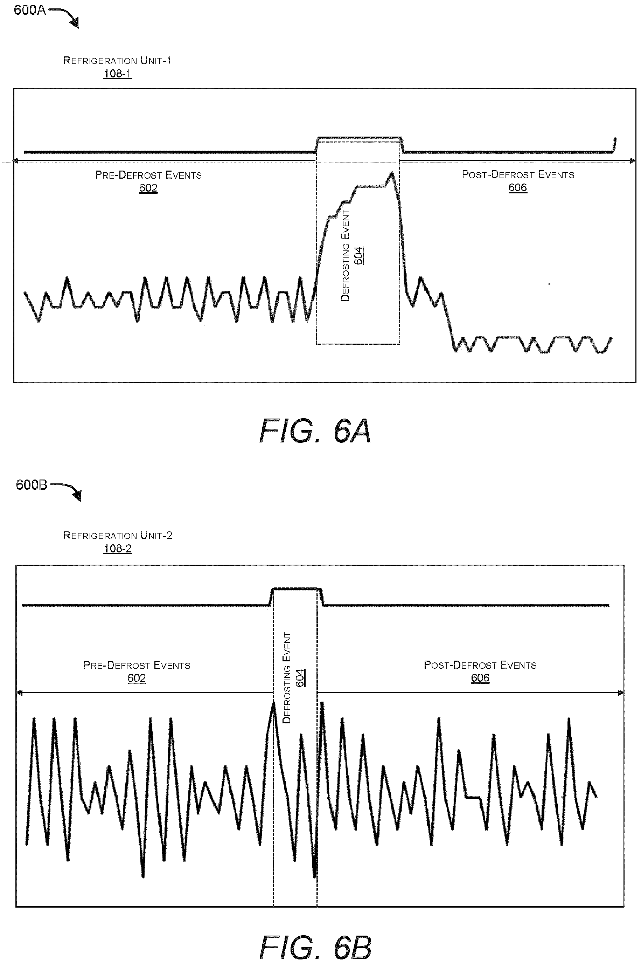

The defrost behavior profiler 212 is configured to extract the defrosting-related characteristics/features and correlate the extracted features (first set of defrost parameters) with other available parameters (second set of parameters) such as return air temperature, supply air temperature, evaporator input temperature, and evaporator output temperature to determine the performance improvement before and after defrosting. Further, the defrost behavior profiler 212 is configured to generate individual signatures corresponding to the pre-event defrost and post-event defrost for every cycle for the refrigeration units 108, based on the defrost parameters and the corresponding defrost policy. For example, referring to FIGs. 6A and 6B, exemplary defrost behaviors 600A, 600B of the refrigeration units (assets) 108-1, 108-2, respectively, are illustrated. The defrost behavior profiler 212 is configured to generate individual signatures corresponding to the pre-defrost event 602 and post-defrost event 606 for every cycle of the refrigeration units 108, where the pre-defrost event 602 is considered before the defrost event 604 and the post- defrost event is considered after the defrost event 604 of the refrigeration units 108-1, 108-2. The machine learning/deep learning algorithms of the machine learning models are implemented by the machine learning module 218 are used to determine the behavior of defrosting in the refrigeration units as a value in terms of defrosting time/duration, and defrost temperature, and/or further schedule to trigger defrost or avoid defrosting.

In one or more embodiments, the defrost behavior profiler 212 is configured to generate individual defrost signatures for each refrigeration unit 108 and categorize them based on the auto-detecting persistence threshold index. For example, whenever the auto-detecting persistence threshold index is breached, the defrost behavior profiler 212 categorizes the defrost signature of the corresponding defrost operation as "valid".

In an exemplary embodiment, the ice gradient profiler 214 is configured to predict ice gradient profiles for the refrigeration units 108 and create a priority rank based on the outcome impact of each of the ice gradient profiles to create an ice gradient index. In one or more embodiments, the ice gradient profiler 214 is configured to retrieve, either from the database 210 or remotely from the controller 110 of connected refrigeration units 108, the input data pertaining to dynamic parameters comprising one or more of evaporator surface temperature, return air temperature, defrost status, and expansion valve opening degree and static parameters comprising the type of controller used in the corresponding refrigeration unit 108, attributes comprising type, and cooling type of the refrigeration unit 108. The ice gradient profiler 214 extracts and correlates the received parameters to generate characteristic features indicative of the behavior and performance of one or more components of the refrigeration units 108 and correspondingly generate one or more events based on the generated characteristic features. The ice gradient profiler 214 further classifies the generated events into a systematic event and a non-systematic event and identifies a frosting pattern associated with the refrigeration units 108 by analyzing the non-systematic events. The ice gradient profiler 214 further determines a quantum of icing and a rate of ice formation in the refrigeration units 108 based on the identified frosting pattern for each of the refrigeration units 108 and correspondingly predicts the ice gradient associated with the refrigeration units 108 and creates a priority rank based on the outcome impact of each of the ice gradient profiles to create an ice gradient index.

In an exemplary embodiment, the product input constraint profiler 216 is configured to determine product input constraints corresponding to profiles of the product(s) stored in the refrigeration units 108. The product input constraint profiler 216 uses product group profiles to generate product groups, which are created based on an operating temperature, type of the refrigeration unit 108, and information extracted from product manuals. Further, the product input constraint profiler 216 uses product quality standards and product spoilage history to determine a product quality impact index for each of the product group profiles, which are generated from static information available from regulators and maintenance logs to determine the spoilage history. Furthermore, the product input constraint profiler 216 uses the product quality impact index to derive thresholds of product, and product compliance to get the intensity of non-compliance by time and temperature, associated with a given refrigeration unit, in correlation with a group of refrigeration units, within a site or across enterprises. All the above three inputs are then correlated by the product input constraint profiler 216 to generate/determine the product input constraints for the refrigeration units 108.

All the refrigeration units 108 connected to server 102 may either be associated with a single enterprise/company or may be installed at a single site or may be associated with different enterprises/companies. The product compliance involves comparing the defrost temperature and defrost time (or defrost performance) of individual refrigeration unit with other refrigeration units among the same site/enterprise to check if the refrigerant units 108 comply with the site's/enterprise's standards or not. Moreover, the product compliance of individual refrigeration unit 108 may also be compared with refrigeration units 108 available across different enterprises to check if the refrigerant units 108 complies with the standards of all the refrigeration units or not.

In an exemplary embodiment, a case design constraint profiler of the server 102 is configured to execute design constraints and operational constraints associated with the refrigeration units 108, and the self-regulating defrost module 220 is configured to self-regulate a defrost event for the refrigeration units in terms of a set of design constraint parameters (defrost time, defrost temperature and defrost frequency), based on the individual signatures corresponding to the historic defrost events generated by the defrost behavior profiler 212, the ice gradient index determined by the ice gradient profiler 214, the product input constraints determined by the product input constraint profiler 216, and the design constraints and operational constraints executed by the case design constraint profiler.

In one or more embodiments, the server 102 may cause the system 100 to exclude such refrigeration units that are without a self-defrost feature, based on a continuous learning process. Further, in an event of a failure in the defrosting system of any refrigeration unit, the server 102 may enable the corresponding controller to perform a fixed frequency and duration defrosting operation in the refrigeration unit.

In one or more embodiments, the server 102 (or one or more modules/processing engines) is configured to continuously learn and refine the self-regulated defrosting by continuously learning from the (defrost) outcome and the feedback received from the maintenance team, technicians, and users. The server 102 is continuously trained with refrigeration unit (asset) specific information, executed defrost operations, maintenance information of the refrigeration units, and field feedback from the technicians.

Accordingly, the self-regulating defrost module 220 is configured to provide for a self-executed or self-regulated defrost operation, deposing the fixed frequency and fixed duration-based defrosting operation in the refrigeration units 108. The self-regulating defrost module 226 is configured to continuously measure and learn the (defrost) outcomes that are fed as input to the defrost behavior profiler 212 for instance to accurately identify failure instances.

In an exemplary embodiment, a report/notification module (not shown) is configured to generate one or more reports, notifications or worklist that contains recommendations (of one or more corrective actions) with regard to failure instances of defrost operations. In one or more embodiments, a technician or a user may refer to the one or more reports, notifications or worklist to rectify the issue and/or solve the problem related to the defrost failure instance for a particular refrigeration unit 108. The system 100 may provide proactive corrective actions along with necessary parts to be taken by the technician or team visiting the particular refrigeration unit to be rectified, to solve the problem. The alarm unit 222 may cause the server 102 to notify the proactive corrective actions and necessary parts information to the mobile devices 106, 110 of the technician in form of text messages, emails, and the likes.

The database 210 may store metadata, parameters data, pre-processed data, the plurality of defrost error signatures, the plurality of defrosting thermal models, the one or more thermal features, the one or more behaviour profiles, the one or more cases and the one or more recommended corrective actions, worklists, reports, and notifications amongst other data.

The other data that the server 102 may collect and utilize may include time series parametric data from the refrigeration system 108 (or controller 110). The collected data includes evaporator surface temperature, evaporator input temperature, evaporator output temperature (refrigerant flow side), supply air temperature, return air temperature, rack evaporator temperature, rack condensing temperature, defrost status, cooling status, expansion valve opening degree (OD%), and other configuration details. Along with the dynamic parametric data, static parametric data is received by the server 102, which includes the type of controller, type of asset, cooling type as attributes, and operational policies associated with the refrigeration unit 108.

In an exemplary embodiment, the other modules may enable the server 102 to derive data based on the information available from known refrigeration units. Data is derived from the parameters already available with the system 100. These derived parameters such as superheat may be derived from evaporator input and evaporator output temperature, cooling mode may be derived from the expansion valve, defrost status may be derived from evaporator temperature and the like. Such other modules are useful for legacy refrigeration units that are not associated with the service provider or refrigeration units where the measured parameters are less or are from a different service provider (vendor or manufacturer). Such other modules enable the server 102 to determine unavailable parameters associated with a set of refrigeration units among the refrigeration units based on the available (known) parameters associated with another set of refrigeration units among the refrigeration units.

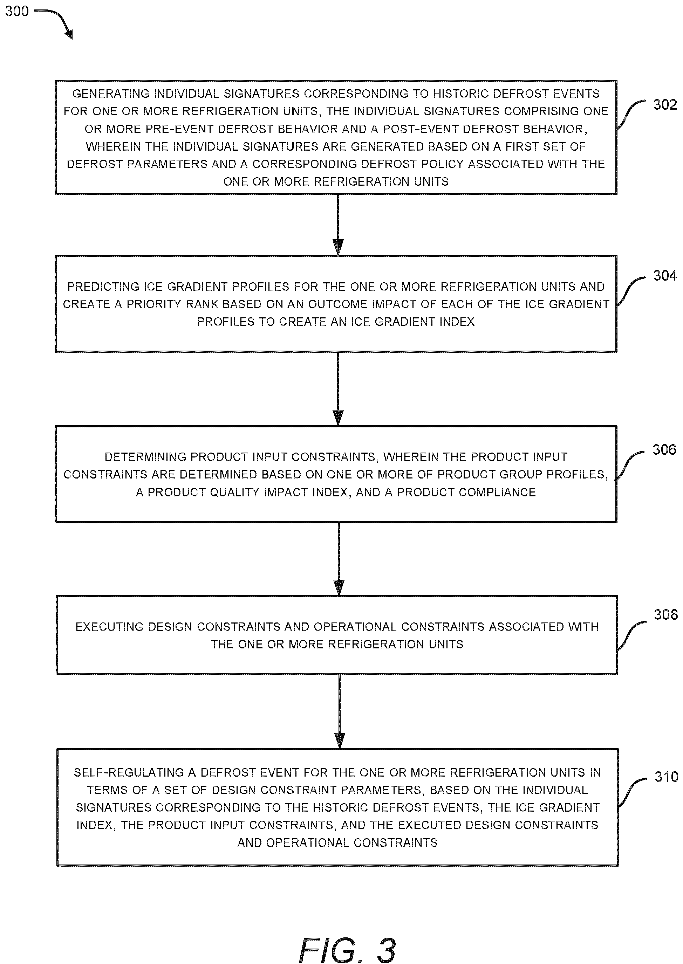

Referring to FIG. 3, exemplary steps involved in a method 300 for self-regulated defrost operation of one or more refrigeration units are illustrated. Method 300 includes step 302 of generating individual signatures corresponding to historic defrost events for one or more refrigeration units, in association with one or more pre-event defrost behavior and one or more post event defrost behavior, where the individual signatures are generated based on a first set of defrost parameters and a corresponding defrost policy.

In one or more embodiments, at block 302, method 300 includes the step of retrieving either from a database or remotely from a controller of connected refrigeration units, the defrost operations metadata indicative of various parameters, features, and characteristics associated with a defrost operation in refrigeration units 108. The collected metadata (input data) includes a first set of defrost parameters that may include but are not limited to a defrost type, defrosting time, defrost temperature, and schemes of input data associated with defrost events and a corresponding defrost policy that may correspond to defrosting-related static information. Further, at block 302, method 300 includes the step of extracting the defrosting-related characteristics/features (first set of defrost parameters) and correlating the extracted features with other available parameters (second set of parameters) such as return air temperature, supply air temperature, evaporator input temperature, and evaporator output temperature to determine the performance improvement before and after defrosting. Accordingly, the individual signatures corresponding to the pre-event defrost and post-event defrost for every cycle for the refrigeration units 108 the defrost parameters and the corresponding defrost policy may be generated.

Method 300 further includes step 304 of predicting ice gradient profiles for the one or more refrigeration units and creating a priority rank based on an outcome impact of each of the ice gradient profiles to create an ice gradient index.

Method 300 further includes step 306 of determining product input constraints associated with the refrigeration units. In one or more embodiments, the product input constraints are determined by generating product group profiles based on product profiles, determining a product quality impact index for each of the product group profiles based on product quality standards and product spoilage history, and determining product compliance for each of the product profiles corresponding to each of the product quality impact index based on a set of product compliance parameters. The product group profiles may be generated by machine learning models. Accordingly, the product input constraints may be determined based on the plurality of product group profiles, the product quality impact index, and the product compliance and constraints.

The product group profiles may be created by the machine learning models, based on an operating temperature, type of the refrigeration unit, and information extracted from product manuals. Further, the spoilage history and the product quality standards are generated from static information available from regulators and maintenance logs of the one or more refrigeration units. Furthermore, the product compliance may be represented by the temperature and time associated with a given refrigeration unit, in correlation with a group of refrigeration units, within a site or across enterprises.

In one or more embodiments, one or more machine learning systems may be used to train one or more models described herein. The machine learning systems may use one or more of supervised learning, semi-supervised, unsupervised learning, reinforcement learning, and/or other machine learning techniques). In one or more embodiments, the machine learning models may include decision trees, support vector machines, regression analysis, Bayesian networks, random forest learning, dimensionality reduction algorithms, boosting algorithms, artificial neural networks (e.g., fully connected neural networks, deep convolutional neural networks, or recurrent neural networks), deep learning, and/or other machine learning models. For example, in one or more embodiments, the machine learning systems may use unsupervised learning algorithms to train the one or more models (e.g., the thermal models). For example, in one or more embodiments, unsupervised learning algorithms may be configured to use input data that is not labeled, classified, or categorized. The unsupervised learning algorithms may be configured to identify similarities in the input data and to group new data based on the presence or absence of the identified similarities. Using unsupervised learning algorithms may be beneficial because it may allow for discovering hidden trends and patterns or extracting data features from the input data that would have been difficult to obtain if other techniques were used.

It is to be understood that the machine learning systems are described here as examples for techniques for identifying causes of defrost failures and determining corrective actions. However, other techniques, are also contemplated by the invention. As such, any computer-implemented techniques, or other machine-learning techniques for identifying causes of defrost failures and determining corrective actions are contemplated by the invention.

Method 300 further includes step 308 of executing design constraints and operational constraints associated with the one or more refrigeration units, followed by step 310 of self-regulating a defrost event for the one or more refrigeration units in terms of a set of design constraint parameters, based on the individual signatures corresponding to the historic defrost events (generated at step 302), the ice gradient index (predicted at step 304), the product input constraints (determined at step 306), and the design constraints and operational constraints (executed at step 308).

Referring to FIG. 4, an exemplary block diagram of the controller 110 installed in refrigeration units 108 of the system 100 is illustrated. The controller 110 includes a processor 402, a memory 404, a set of sensors 406, a communication unit 408 (such as a transceiver), an alarm unit 410, and an actuator 412 being configured within a single housing that may be installed in the refrigeration units 108 or disposed of within the refrigeration units 108. The processor 402 is coupled to the memory 404, the sensors 406, the transceiver or communication unit 408, the alarm unit 410, and the actuator 412. The processor 402 includes suitable logic, circuitry, and/or interfaces that are operable to execute one or more instructions stored in the memory 404 to perform a predetermined operation. The memory 404 may be operable to store the one or more instructions. The processor 402 may be implemented using the processor 402 known in the art. Some of the commonly known memory 404 implementations include, but are not limited to, a random access memory (RAM), a read only memory (ROM), a hard disk drive (HDD), and a secure digital (SD) card. Further, memory 404 includes the one or more instructions that are executable by the processor 402 to perform specific operations. It is apparent to a person having ordinary skills in the art that the one or more instructions stored in the memory 404 enables the hardware of the mobile device to perform the predetermined operation.

The sensors 406 are configured to monitor the dynamic parameters of the refrigeration units 108. These dynamic parameters may include evaporator surface temperature, evaporator input temperature, evaporator output temperature, supply air temperature, return air temperature, rack evaporator temperature, rack condensing temperature, defrost status, cooling status, and expansion valve opening degree. Further, the parameters may also include static parameters such as the type of controller used in the corresponding refrigeration unit, attributes comprising type, size, design, and cooling type of the one or more refrigeration units, and operational policies, and defrost policies associated with the one or more refrigeration unit, which may be manually collected. The sensors 406 may include temperature sensors, light sensors, humidity sensors, gas sensors, pressure sensors, and flow meters, but are not limited to the like. The captured parametric data of the refrigeration units 108 are then transmitted to the server 102 via transceiver 408 for further processing as already explained in detail in FIG. 2A and 2B.

In some embodiments, the sensors 406 may be distributed at various positions within the zones of refrigeration units 108, and these distributed sensors 406 may be operatively connected to the processor 402 of the controller 110 via wired media or wireless media. In other embodiments, all the sensors 406 of the controller 110 may be positioned over a single frame that may be installed at different zones of the refrigeration units 108.

The communication unit 408 (transceiver 508) transmits and receives messages and data to/from the server 102 and the devices 106. Examples of the transceiver 408 may include but are not limited to, an antenna, an Ethernet port, an USB port, or any other port that may be configured to receive and transmit location and parameters data. The controller 110 further includes a power source such as a battery that is within the housing of the controller 110 to supply electrical power to the components of the controller 110. Besides, the controller 110 may also be electrically connected to a battery or power source of the refrigeration unit 108.

In one example, a GPS may be provided in the controller 110 to capture the location (coordinates) of the refrigeration unit 108, and the GPS data may be directly transmitted to server 102 via the transceiver 408, which may allow the user 104 to identify and reach at the installation site of the refrigeration unit 108 when required. In another example, the location of refrigeration unit 108 may be captured based on the interaction of a WIFI module of the controller 110 with nearby available WIFI access points. Once the controller 110 is in a range of any nearby available WIFI access points, the controller 110 determines its location to be the same as the location of the nearby available WIFI access points. In yet another example, the location of refrigeration unit 108 may be captured based on the interaction of the transceiver 408 of the controller 110 with a nearby cellular tower. Once the controller 110 is in the range of nearby cellular towers, controller 110 determines its location based on corresponding cellular tower triangulation.

In an exemplary embodiment, the alarm unit 410 enables the controller 110 to generate and transmit a set of alert signals to the mobile devices 106 of the users 104 based on the priority of the defrosting operation. Further, when the threshold value of the predicted ice gradient exceeds a predefined unsafe value, the server 102 may directly transmit a set of alert signals to the defrosting unit of the corresponding refrigeration unit via the controller 110 to enable self-executing/self-regulating defrosting of the corresponding refrigeration unit 108. In an exemplary embodiment, the controller 110 may also include actuators 412 that are configured to activate the defrosting system of the refrigeration unit 108 based on the priority of ice gradient mitigation.

Thus, the invention provides a method and a system for self-regulated defrost operation of one or more refrigeration units by continuous learning.

According to another exemplary embodiment, a device (not shown) is disclosed, which is adapted to be connected or configured with multiple refrigeration units at an area of interest (AOI) and is capable of enabling self-regulated defrost operation in one or more refrigeration units. The device may replace the server 102 and perform all the combined functionalities of the server 102 as well as the controller 110 in the AOI. The device may be installed at the AOI near the refrigeration units 108 such that the corresponding refrigeration units 108 remains in a network coverage area around the device. In some embodiments, the device remains in communication with the controller 110 of all the refrigeration units 108 at the AOI. In one or more embodiments, the device may include the controller 110 or associated components disposed of within a housing of the device, which allows the device to be operatively connected to the refrigeration unit and operate as the controller 110 for all the refrigeration units 108. Additionally, the device acts as the server 102 confined to the AOI and is configured to enable self-regulated defrost operation in the refrigeration units in the event of a required defrost operation as already explained in detail with reference to FIGs. 1 to 3. The refrigeration units of different or same service providers/manufacturers at the AOI may be configured to be operatively connected to the device by configuring or programming the corresponding controllers by an expert or technician.

The device may include a set of sensors (406 of FIG. 4) to capture and monitor the parameters of the refrigeration units. Further, the device includes a communication module (408 of FIG. 4) that communicatively couples the device to the refrigeration units 108 at the AOI. Furthermore, the device is configured to transmit a set of control signals to a defrosting unit of the refrigeration units 108 to control defrosting of the corresponding refrigeration unit based on the predicted ice gradient and its priority.

In one or more embodiments, the device is configured to continuously learn and refine the self-regulated defrosting by continuously learning from the (defrost) outcome and the feedback received from the maintenance team, technicians, and users. The device is continuously trained with refrigeration unit (asset) specific information, executed defrost operations, maintenance information of the refrigeration units, and field feedback from the technicians

While the invention has been described with reference to exemplary embodiments, it will be understood by those skilled in the art that various changes may be made, and equivalents may be substituted for elements thereof without departing from the scope of the invention as defined by the appended claims.

In interpreting the specification, all terms should be interpreted in the broadest possible manner consistent with the context. In particular, the terms "comprises" and "comprising" should be interpreted as referring to elements, components, or steps in a non-exclusive manner, indicating that the referenced elements, components, or steps may be present, or utilized, or combined with other elements, components, or steps that are not expressly referenced.

## Claims

1. A system (100) for self-regulated defrost operation of one or more refrigeration units (108-1,108-2;108-N), the system (100) comprising:
a server (102) in communication with the one or more refrigeration units (108-1,108-2;108-N), the server (102) comprising a processor (202) coupled to a memory (204) storing instructions executable by the processor (202) causing the system (100) to:
generate individual signatures corresponding to historic defrost events for the one or more refrigeration units (108-1,108-2; 108-N), the individual signatures comprising one or more pre-event defrost behavior (602) and one or more post-event defrost behavior (606), wherein the individual signatures are generated based on a first set of defrost parameters and a corresponding defrost policy associated with the one or more refrigeration units (108-1,108-2;108-N);
predict ice gradient profiles for the one or more refrigeration units (108-1,108-2;108-N) and create a priority rank based on an outcome impact of each of the ice gradient profiles to create an ice gradient index;
determine product input constraints, wherein the product input constraints are determined based on one or more of product group profiles, a product quality impact index, and a product compliance;
execute design constraints and operational constraints associated with the one or more refrigeration units (108-1,108-2;108-N); and
self-regulate a defrost event (604) for the one or more refrigeration units (108-1,108-2;108-N) in terms of a set of design constraint parameters, based on the individual signatures corresponding to the historic defrost events, the ice gradient index, the product input constraints, and the executed design constraints and operational constraints.

2. The system of claim 1, wherein the first set of defrost parameters comprises a defrost type, defrosting time, defrost temperature, and schemes of input data associated with defrost events (604), and
wherein the defrost policy corresponds to defrosting-related static information, and/or
wherein the processor (202) causes the system to predict and/or create the defrost policy for each of the one or more refrigeration units (108-1,108-2;108-N) based on input data.

3. The system of claims 1 or 2, wherein the product group profiles are generated based on product profiles, and wherein the product quality impact index for each of the product group profiles are determined based on product quality standards and a product spoilage history, optionally wherein the spoilage history and the product quality standards are generated from static information available from regulators and maintenance logs of the one or more refrigeration units (108-1,108-2;108-N).

4. The system of claim 3, wherein the product compliance for each of the product profiles corresponding to each of the product quality impact index are determined based on a set of product compliance parameters, optionally
wherein the set of product compliance parameters comprises defrost temperature and defrost time set by manufacturers of the corresponding refrigeration units (108-1,108-2;108-N), and
wherein the set of design constraint parameters comprises time period for defrost, defrost temperature, and frequency of defrost.

5. The system of any preceding claim, wherein the processor (202) causes the system to determine one or more behavior characteristic features related to temperature, wherein the one or more behavior characteristic features comprises an evaporator temperature, highest temperature reached during a defrosting process, a rate of change of temperature, and time taken to reach freezing temperature, optionally wherein the processor (202) causes the system to correlate the one or more behavior characteristic features with a second set of parameters, wherein the second set of parameters comprises return air temperature, supply air temperature, evaporator input temperature, and evaporator output temperature.

6. The system of any preceding claim, wherein the ice gradient profile corresponds to input about frosting formation of the one or more refrigeration units (108-1,108-2;108-N).

7. The system of claims 3 or 4, or claims 5 or 6 when dependent upon claim 3, wherein the product profiles correspond to profiles of product stored in the one or more refrigeration units (108-1,108-2; 108-N).

8. The system of any preceding claim, wherein the plurality of product group profiles are created based on an operating temperature, type of the refrigeration unit (108-1,108-2;108-N), and information extracted from product manuals.

9. The system of claim 4, wherein the product compliance of the one or more refrigeration units (108-1,108-2;108-N) are determined by corelating the defrost temperature and defrost time associated with each of the refrigeration units with the defrost temperature and defrost time of remaining refrigeration units among the one or more refrigeration units, wherein the one or more refrigeration units are at a site or across enterprises.

10. The system of any preceding claim, wherein the processor (202) causes the system to exclude the refrigeration units (108-1,108-2;108-N) that are without self-defrost feature, based on a continuous learning process.

11. A method (300) for self-regulated defrost operation of one or more refrigeration units (108-1,108-2;108-N), the method (300) comprising the steps of:
generating individual signatures corresponding to historic defrost events for one or more refrigeration units (108-1,108-2;108-N), the individual signatures comprising one or more pre-event defrost behavior (602) and a post event defrost behavior (606), wherein the individual signatures are generated based on a first set of defrost parameters and a corresponding defrost policy associated with the one or more refrigeration units (302);
predicting ice gradient profiles for the one or more refrigeration units (108-1,108-2;108-N) and create a priority rank based on an outcome impact of each of the ice gradient profiles to create an ice gradient index (304);
determining product input constraints, wherein the product input constraints are determined based on one or more of product group profiles, a product quality impact index, and a product compliance (306); and
executing design constraints and operational constraints associated with the one or more refrigeration units (308), and
self-regulating a defrost event (604) for the one or more refrigeration units (108-1,108-2;108-N) in terms of a set of design constraint parameters, based on the individual signatures corresponding to the historic defrost events, the ice gradient index, the product input constraints, and the executed design constraints and operational constraints (310).

12. The method of claim 11, wherein the method of determining the product input constraints comprises the steps of:
generating the product group profiles based on product profiles;
determining the product quality impact index for each of the product group profiles based on product quality standards and product spoilage history; and
determining the product compliance for each of the product profiles corresponding to each of the product quality impact index based on a set of product compliance parameters.

13. The method of claims 11 or 12, wherein the method comprises the step of determining one or more behavior characteristic features related to temperature, wherein the one or more behavior characteristic features comprises an evaporator temperature, highest temperature reached during a defrosting process, a rate of change of temperature, and time taken to reach freezing temperature, optionally wherein the method comprises the step of correlating the one or more behavior characteristic features with a second set of parameters, wherein the second set of parameters comprises return air temperature, supply air temperature, expansion valve input temperature, and expansion valve output temperature.

14. The method of claim 12, or claim 13 when dependent upon claim 12, wherein the plurality of product group profiles is created based on an operating temperature, type of the refrigeration unit, and information extracted from product manuals, and wherein the spoilage history and the product quality standards are generated from static information available from regulators and maintenance logs of the one or more refrigeration units (108-1,108-2;108-N).

15. A device configurable with one or more refrigeration units (108-1,108-2;108-N) and operable to self-regulate defrost operation of the one or more refrigeration units (108-1,108-2;108-N), the device comprising:
a processing unit adapted to be operatively coupled to the one or more refrigeration units, the processing unit comprising a processor coupled to a memory storing instructions executable by the processor and configured to:
generate individual signatures corresponding to historic defrost events for one or more refrigeration units (108-1,108-2;108-N), the individual signatures comprising one or more pre-event defrost behavior (602) and a post-event defrost behavior (606), wherein the individual signatures are generated based a first set of defrost parameters and a corresponding defrost policy associated with the one or more refrigeration units (108-1,108-2;108-N);
predict ice gradient profiles for the one or more refrigeration units (108-1,108-2;108-N) and create a priority rank based on an outcome impact of each of the ice gradient profiles to create an ice gradient index;
determine product input constraints, wherein the product input constraints are determined based on one or more of product group profiles, a product quality impact index, and a product compliance; and
execute design constraints and operational constraints associated with the one or more refrigeration units (108-1,108-2;108-N); and
self-regulate a defrost event (604) for the one or more refrigeration units (108-1,108-2;108-N) in terms of a set of design constraint parameters, based on the individual signatures corresponding to the historic defrost events, the ice gradient index, the product input constraints, and the executed design constraints and operational constraints.
